# FASCICULE DE BREVET EUROPEEN

(11) **EP 0 618 029 B1**
(45) Date de publication et mention de la délivrance du brevet: **04.06.1997**
(21) Numéro de dépôt: 94420104.5
(22) Date de dépôt: 25.03.1994
(51) Int. Cl.: B23B 31/12

(54) **Mandrin porte-outil pour l'équipement d'une machine tournante, telle qu'une perceuse**
Werkzeughaltefutter für eine drehende Maschine bzw. eine Bohrmaschine
Tool holding-chuck for a rotating machine like a drill

(30) Priorité: 26.03.1993 FR 9303802
(43) Date de publication de la demande: 05.10.1994
(73) Titulaire: ETABLISSEMENTS AMYOT S.A., F-25300 Pontarlier (FR)
(72) Inventeur: Amyot, Claude Virgile Louis, F-25300 Doubs (FR)
(74) Mandataire: Maureau, Philippe

(56) Documents cités:
- EP-A- 0 017 748
- EP-A- 0 151 791
- EP-A- 0 300 375
- EP-A- 0 468 128
- EP-A- 0 468 157
- EP-A- 0 519 412
- US-A- 5 044 643

## Description

La présente invention a pour objet un mandrin porte-outil pour l'équipement d'une machine tournante, telle qu'une perceuse selon le préambule de la revendication 1 et comme connû du document EP-A- 0300375.

Les mandrins sont le plus souvent utilisés pour réaliser la fixation vis-à-vis d'un arbre moteur, soit d'une mèche de forage ou foret, soit un embout de tournevis. Une première possibilité pour réaliser la fixation de la queue cylindrique d'un outil sur le mandrin consiste à équiper celui-ci d'un système à crémaillère, assurant à l'aide d'une clé le serrage des mors sur l'outil, avant utilisation de la machine. La crémaillère assure l'entraînement en rotation, par rapport au corps d'une chemise entourant celui-ci, sur la face intérieure de laquelle est fixé un écrou, dont le filetage interne coopère avec le filetage externe des mors. Si cette solution donne satisfaction d'un point de vue pratique, elle présente l'inconvénient de nécessiter l'utilisation d'une clé qui est souvent égarée par l'utilisateur. Cette utilisation d'une clé, est d'autant plus contraignante dans les perceuses dites sans fil, c'est-à-dire qui sont alimentées à partir de batteries faisant partie intégrante du corps de la machine, ce qui leur donne une mobilité très importante. Ces machines ou perceuses sans fil sont généralement équipées de mandrins à clé pour la tenue des outils. Ce type de mandrin permet l'utilisation dans les deux sens de rotation, et le passage d'une vis axiale pour le blocage du mandrin sur la broche de la perceuse lorsque le sens de rotation de l'arbre moteur tend à favoriser le desserrage du mandrin vis-à-vis de celui-ci. Il existe des mandrins permettant un serrage satisfaisant de l'outil sans nécessiter la mise en oeuvre d'une clé.

Une première solution connue consiste à ménager, à l'extrémité arrière de la chemise d'entraînement en rotation de l'écrou d'actionnement des mors, plusieurs dents, une bague montée concentriquement sur le corps étant maintenue axialement écartée de la chemise sous l'action d'un ressort comportant au moins une dent en vis-à-vis de la chemise. Cette bague est montée libre en rotation autour du corps.

En pratique, pour réaliser le serrage ou le desserrage de l'outil, il convient que l'utilisateur saisisse la bague et la déplace vers l'avant, pour que les dents de celle-ci viennent en prise avec les dents de la chemise, en même temps qu'il commande la mise en rotation du corps du mandrin, à partir de l'arbre-moteur, dans un sens ou dans l'autre. Il se produit un mouvement relatif en rotation des dents antagonistes de la bague et de la chemise provoquant une série de chocs favorisant le serrage ou le desserrage des mors, selon le sens de rotation envisagé.

Dans un autre mandrin connu, la chemise présente, à son extrémité avant, une partie en forme de collerette radiale de laquelle font saillie plusieurs crans tournés vers l'arrière. Par ailleurs, sur l'écrou d'actionnement des mors est emmanché à force une bague comportant des crans tournés vers l'avant, et destinés à venir en prise avec les crans que comporte la chemise.

Un ressort prenant appui sur le corps du mandrin maintient en prise les crans, respectivement, de la bague et de la chemise tant qu'un certain effort n'est pas atteint.

En pratique, il suffit à l'utilisateur, pour réaliser le serrage ou le desserrage des mors d'assurer manuellement un blocage en rotation de la chemise et d'actionner l'arbre-moteur dans un sens ou dans l'autre. Il en résulte une série de chocs exercés par les crans de la bague contre les crans de la chemise, favorisant le serrage ou le desserrage, selon les cas.

Toutefois, ces deux mandrins connus possèdent une structure complexe qui conduit à un prix de revient élevé et à un encombrement très important.

Une autre solution est fournie dans le document EP-A-0 300 375 qui concerne un mandrin utilisant un pas très fin pour les mors, et une série de billes disposée entre l'écrou et le corps, cette dernière caractéristique, à savoir interposition de billes entre l'écrou et le corps, étant déjà connu dans les mandrins industriels. Le mandrin, décrit dans ce document, présente l'inconvénient de ne pas posséder de parfaites caractéristiques d'indesserrabilité, et d'être très fastidieux à manoeuvrer tant pour le serrage que pour le desserrage, compte tenu de la finesse du pas et, enfin, de nécessiter un grand diamètre extérieur du mandrin pour obtenir un bon serrage.

Les mandrins auto-serrants comportant une butée à billes intérieure présentent l'inconvénient de ne pas pouvoir être utilisés en rotation à gauche, de ne pas permettre le passage d'une vis centrale pour le blocage du mandrin sur la broche de la machine, et de se desserrer lors de fortes vibrations durant les travaux de percussion.

Les dispositifs, décrits précédemment, ne donnent toutefois pas satisfaction dans le cas de machines très performantes qui exigent un verrouillage mécanique qui empêche l'ouverture du mandrin durant les travaux de percussion notamment.

Le but de l'invention est de fournir un mandrin porte-outil de conception simple, pouvant être réalisé avec des matériaux légers, notamment en intégrant un certain nombre de pièces en matière synthétique, qui possède un mécanisme de verrouillage en position de travail, ce mécanisme étant d'une conception et d'une mise en oeuvre très simples.

A cet effet, le mandrin qu'elle concerne, du type comprenant un corps fixé sur l'arbre moteur de la machine, dans lequel sont montés plusieurs mors coulissant dans des alésages et convergent vers l'avant, le corps étant solidaire, dans sa partie postérieure d'une bague d'immobilisation, en avant de laquelle est montée pivotante sur le corps une chemise dont la paroi intérieure est solidaire d'un écrou en prise avec la partie extérieure filetée des mors, est caractérisé en ce que le corps est équipé, dans sa zone recouverte par la chemise, d'une denture périphérique, tandis que la chemise comporte un organe de verrouillage profilé qui, destiné à être engagé dans la denture du corps, en position serrée du mandrin, est actionné par une bague montée pivotante sur l'extrémité avant du corps du mandrin.

Le mandrin étant actionné manuellement, par manoeuvre de la chemise, tant à l'ouverture qu'à la fermeture, il suffit, en fin de fermeture, d'actionner la bague pour réaliser le verrouillage et, préalablement à l'ouverture du mandrin, d'actionner la bague pour réaliser le déverrouillage.

Selon une forme d'exécution, la denture ménagée sur le corps est une denture droite, tandis que l'organe de verrouillage est constitué par un ressort plat conformé de façon inclinée, par rapport à la perpendiculaire aux dents lorsqu'aucune action n'est exercée sur lui.

Avantageusement, le ressort plat fait saillie vers l'intérieur, dans une partie évidée que comporte la chemise, dans laquelle est déplaçable une languette profilée solidaire de la bague, destinée, dans une position angulaire extrême, à prendre appui contre le ressort pour dégager celui-ci de la denture.

Selon une autre caractéristique de l'invention, la chemise comporte, débouchant dans sa face tournée vers l'avant, plusieurs évidements centrés sur l'axe du mandrin, à l'intérieur de chacun desquels est engagé un doigt qui, solidaire de la bague, possède une longueur inférieure à celle de l'évidement correspondant, cette longueur étant considérée dans le sens de l'arc de cercle suivant lequel s'étend cet évidement.

La différence de longueur entre chaque évidement de la chemise et le doigt correspondant de la bague détermine la course de rotation dont la bague est susceptible vis-à-vis de la chemise.

Avantageusement, la chemise comporte, dans sa partie située en regard de la bague, une languette élastique dont l'extrémité libre est équipée d'une partie profilée, tandis que la bague comporte deux encoches qui, espacées l'une de l'autre d'une valeur égale à la course de rotation de la bague par rapport à la chemise, c'est-à-dire à la différence de longueur entre un évidement de la chemise et le doigt correspondant de la bague, sont destinées à recevoir la partie profilée dans les deux positions de fin de course de la bague.

Cet agencement permet d'assurer le blocage élastique de la bague vis-à-vis de la chemise, dans ses deux positions d'extrémité.

Suivant une possibilité, la bague comporte un prolongement tubulaire recouvrant la chemise sur une partie importante de sa longueur. Dans ce cas, le mandrin est actionné par manoeuvre directe de la bague au cours de la totalité du serrage et au cours de la totalité du desserrage de l'outil.

Afin d'assurer le blocage axial de la chemise et de la bague sur le corps, le corps comprend, à proximité de son extrémité avant, une gorge annulaire délimitée, du côté de l'extrémité avant du corps, par une surface perpendiculaire à l'axe du mandrin, tandis que la bague comporte une collerette conique engagée dans la gorge du corps, en position montée du mandrin.

Selon une variante d'exécution, le corps comprend, à proximité de son extrémité avant, une gorge annulaire délimitée, du côté de l'extrémité avant du corps, par une surface perpendiculaire à l'axe du mandrin, tandis que la bague comporte, à son extrémité avant, une pluralité de languettes élastiques destinées à être engagées dans la gorge du corps, en position montée du mandrin.

De toute façon, l'invention sera bien comprise à l'aide de la description qui suit, en référence au dessin schématique annexé représentant, à titre d'exemples non limitatifs, deux formes d'exécution de ce mandrin :
Figure 1 est une vue en perspective d'un premier mandrin ;
Figure 2 en est une vue en coupe longitudinale :
Figure 3 est une vue en perspective éclatée des principales pièces le constituant ;
Figure 4 est une vue en perspective, depuis l'intérieur, de la bague disposée à l'extrémité avant du mandrin ;
Figures 5 et 6 sont deux vues en coupe transversale de ce mandrin, selon la ligne V-V de figure 2, respectivement en position de verrouillage et en position de déverrouillage du mandrin ;
Figure 7 est une vue en perspective d'une variante d'exécution de la bague disposée à l'extrémité avant du mandrin ;
Figure 8 est une vue en coupe longitudinale, similaire à figure 2, d'une variante d'exécution de ce mandrin.

Le mandrin, représenté au dessin comprend un corps **2** dans la paroi postérieure duquel débouche un trou taraudé **3** destiné à réaliser sa fixation sur l'arbre fileté d'une machine tournante, non représentée au dessin. Dans sa partie postérieure, le corps **2** comporte une zone **4** présentant un moletage droit, destinée à réaliser le blocage en rotation de la bague d'immobilisation **5**, réalisée en matière synthétique.

Dans le corps **2** sont ménagés trois alésages **6** servant chacun au guidage d'un mors **7**. Les alésages convergent vers l'avant, de telle sorte que le déplacement des mors vers l'avant se traduise par un rapprochement de ceux-ci permettant le serrage d'un outil, non représenté au dessin.

La partie extérieure des mors **7** comporte un filetage **8** coopérant avec un écrou taraudé **9** pour réaliser le déplacement des mors dans un sens ou dans l'autre suivant le sens d'entraînement en rotation de l'écrou **9**. Cet écrou **9** est bloqué axialement par un circlips **10**. L'écrou **9** comporte un moletage droit **12** permettant le montage de la chemise **13** en matière synthétique également crantée pour le blocage en rotation de celle-ci. A proximité de son extrémité avant, la chemise **13** est équipée d'un organe de verrouillage **14** constitué par un ressort plat, en forme d'épingle à cheveux, destiné à coopérer avec une denture **15** ménagée sur le corps. Cette denture **15** est une denture droite et l'extrémité libre du ressort **14** est inclinée d'environ 45° par rapport à la perpendiculaire aux dents **15**. L'extrémité avant du corps **2** est également équipée d'une bague **16**, avec interpénétration partielle de la bague et de la chemise, et recouvrement de la chemise par la bague sur une longueur relativement importante de la chemise et grâce à une partie **17** en forme de jupe que comporte la bague **16**.

La chemise **13** présente, faisant saillie du côté avant, une partie cylindrique **18** interrompue par trois évidements **19** disposés selon une répartition angulaire régulière. La bague **16** présente, pour sa part, deux surfaces annulaires concentriques, à savoir une première surface annulaire **20** destinée à être située à l'intérieur de la partie tubulaire **18** de la chemise **13**, et une partie annulaire **22** destinée à être située à l'extérieur de la partie annulaire **18** de la chemise. Les parties annulaires **20** et **22** sont reliées par trois parties pleines **23** radiales, en forme de doigts, chacune de longueur inférieure à celle des évidements **19**, la différence de longueur, considérée dans le sens périphérique, entre un évidement **19** et un doigt **23**, correspondant à la course angulaire de la bague **16** vis-à-vis de la chemise **13**.

La partie annulaire intérieure **20** de la bague comporte une ouverture **24** permettant le passage du ressort plat **14** de la chemise **13**. L'une des extrémités de cette ouverture **24** est délimitée par une languette **25** destinée à venir prendre appui sur le ressort plat **14** pour le faire basculer de l'intérieur vers l'extérieur et le dégager de la denture **15**.

En outre, la chemise **13** présente, dans sa partie tubulaire **18** située en regard de la bague, une languette élastique **26** dont l'extrémité **27** est profilée, et est destinée à pénétrer dans l'une ou l'autre de deux encoches **28** ménagées dans la partie annulaire **22** de la bague dans les deux positions de fin de course de celle-ci.

Enfin, le corps **2** comporte, à proximité de son extrémité avant, une gorge annulaire **29** délimitée, du côté de l'extrémité avant du corps, par une surface **30** sensiblement perpendiculaire à l'axe du mandrin. La bague **16** présente, pour sa part, une collerette conique **32** engagée dans la gorge du corps, en position montée du mandrin, assurant ainsi le blocage en rotation de la bague et de la chemise qui lui est associée.

Lorsque le ressort **14** est en position dégagée de la denture **15**, comme montré à la figure 5, il est possible de réaliser le serrage ou le desserrage de l'outil par pivotement de la chemise **13**, et par suite de l'écrou **9** d'entraînement des mors **7**. Au contraire, lorsque l'extrémité libre du ressort **14** est engagée dans la denture **15**, comme montré à la figure 6, le pivotement de le chemise autour du corps est rendu impossible sous la seule action des vibrations résultant du fonctionnement de la machine et du travail de l'outil.

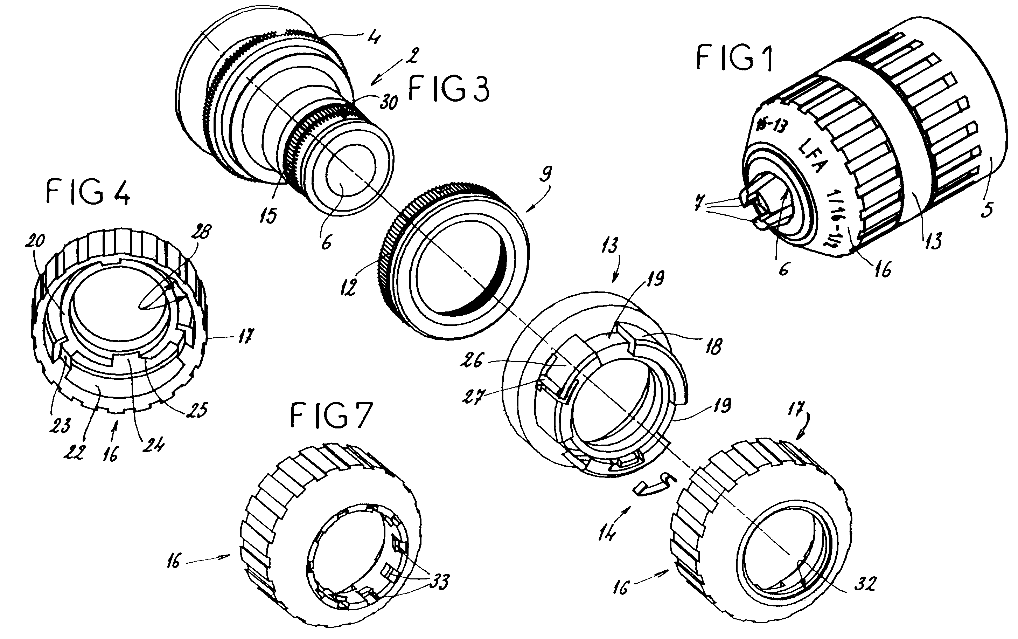

En pratique, la mise en oeuvre du mandrin, représentée aux figures 1 à 7, est la suivante. Les mors **7** étant en position écartée, et la bague **16**, **17** se trouvant dans la position représentée à la figure 5, il est procédé à l'entraînement en rotation de cette bague **16**, **17**, qui entraîne la chemise **13** par l'intermédiaire de l'aspérité **27** engagée dans une encoche **28** de la bague. Quand les mors sont en contact avec l'outil, la résistance de l'écrou **9** et de la chemise **13** augmente. Il se produit alors une rotation de la bague **16**, **17** par rapport à la chemise **13**, dans la limite autorisée par la différence de longueur entre les évidements **19** et les doigts **23**. Pendant cette rotation relative de la bague **16**, **17** par rapport à la chemise **13**, l'aspérité profilée **27** change d'encoche **28**, et la languette **25** s'efface et libère le ressort **14**, la bague **16**, **17** poussant la chemise **13** par l'intermédiaire des trois doigts **23**. Le serrage du mandrin est alors effectué.

Pour réaliser le desserrage, l'opérateur procède de façon inverse, en tournant la bague **16** dans le sens inverse des aiguilles d'une montre. Il y a tout d'abord une rotation relative de la bague **16** par rapport à la chemise **13**, mouvement au cours duquel l'aspérité **27** passe d'une encoche à l'autre, et la languette **25** vient prendre appui sur le ressort **14** pour l'écarter de la denture **15**. En continuant son mouvement d'ouverture dans le sens inverse des aiguilles d'une montre, I'opérateur entraîne la chemise **13** par l'intermédiaire des doigts **23**. Le mandrin s'ouvre alors puisque la chemise **13** entraîne l'écrou **9** qui sollicite les mors en position d'ouverture.

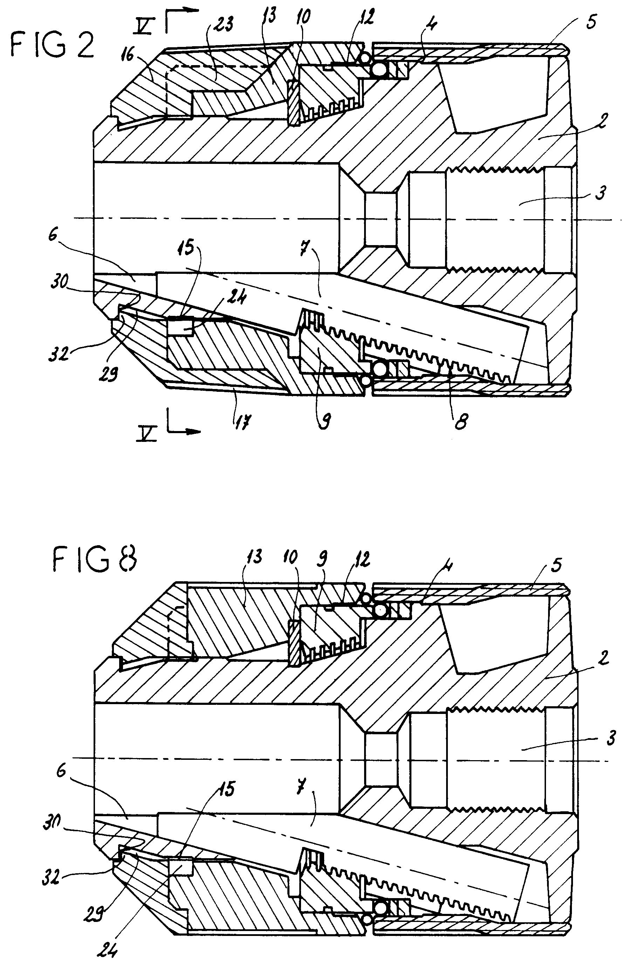

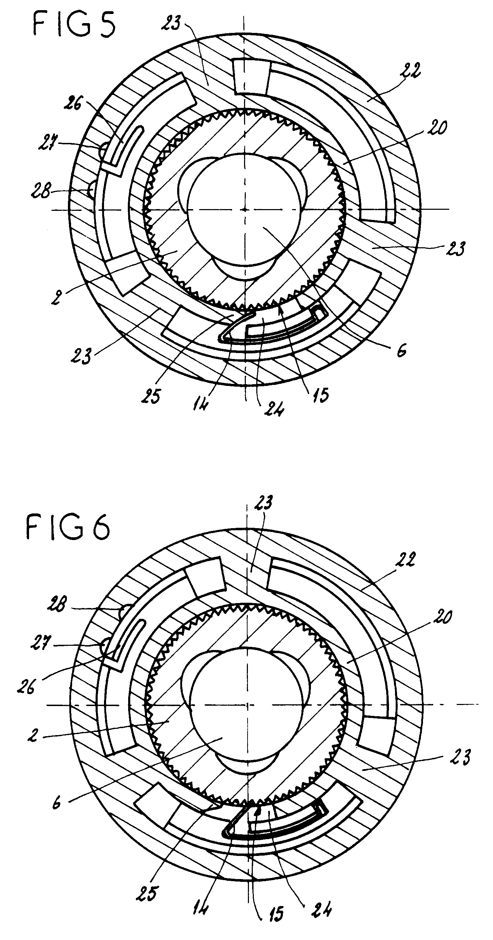

La figure 8 représente une variante d'exécution dans laquelle les mêmes éléments sont désignés par les mêmes références que précédemment. Dans cette vue, il existe juste une interpénétration des faces en regard de la chemise **13** et de la bague **16**. Il convient donc, pour réaliser l'entraînement en rotation de l'écrou **9** d'agir directement sur la chemise **13**, la bague **16** n'étant actionnée qu'en fin de serrage ou en début de desserrage pour réaliser, respectivement, le verrouillage et le déverrouillage du mandrin.

En outre, dans la forme d'exécution, représentée à la figure 7, la collerette conique **32** que comporte la bague **16** en vue de l'immobilisation axiale de la chemise et de la bague, a été remplacée par une pluralité de languettes **33**, régulièrement réparties autour de la bague, possèdant des caractéristiques élastiques, permettant le montage irréversible de la bague sur le corps **2** du mandrin.

Comme il ressort de ce qui précède, l'invention apporte une grande amélioration à la technique existante, en fournissant un mandrin de structure simple, disposant d'un dispositif mécanique de verrouillage en position d'utilisation, et qui est d'une mise en oeuvre très simple pour l'utilisateur.

## Revendications

1. Mandrin porte-outil pour l'équipement d'une machine tournante, telle qu'une perceuse, du type comprenant un corps (2) fixé sur l'arbre moteur de la machine, dans lequel sont montés plusieurs mors (7) coulissant dans des alésages et convergent vers l'avant, le corps étant solidaire, dans sa partie postérieure, d'une bague d'immobilisation (5), en avant de laquelle est montée pivotante sur le corps une chemise (13) dont la paroi intérieure est solidaire d'un écrou (9) en prise avec la partie extérieure filetée des mors, caractérisé en ce que le corps (2) est équipé, dans sa zone recouverte par la chemise, d'une denture périphérique (15), tandis que la chemise comporte un organe de verrouillage profilé (14) qui, destiné à être engagé dans la denture (15) du corps en position serrée du mandrin, est actionné par une bague (16) montée pivotante sur l'extrémité avant du corps du mandrin.

2. Mandrin selon la revendication 1, caractérisé en ce que la denture (15), ménagée sur le corps (2) est une denture droite, tandis que l'organe de verrouillage (14) est constitué par un ressort plat dont l'extrémité libre est orientée de façon inclinée par rapport à la perpendiculaire aux dents lorsqu'aucune action n'est exercée sur lui.

3. Mandrin selon la revendication 2, caractérisé en ce que le ressort plat (14) fait saillie vers l'intérieur, dans une partie évidée que comporte la chemise (13), dans laquelle est déplaçable une languette profilée (25) solidaire de la bague (16) destinée, dans une position angulaire extrême, à prendre appui contre le ressort (14) pour dégager celui-ci de la denture.

4. Mandrin selon l'une quelconque des revendications 1 à 3, caractérisé en ce que la chemise (13) comporte, débouchant dans sa face tournée vers l'avant, plusieurs évidements (19) centrés sur l'axe du mandrin, à l'intérieur de chacun desquels est engagé un doigt (23) qui, solidaire de la bague, possède une longueur inférieure à celle de l'évidement correspondant, cette longueur étant considérée dans le sens de l'arc de cercle suivant lequel s'étend cet évidement.

5. Mandrin selon la revendication 4, caractérisé en ce que la chemise (13) comporte, dans sa partie située en regard de la bague, une languette élastique dont l'extrémité libre est équipée d'une partie profilée (27), tandis que la bague (16) comporte deux encoches (28) qui, espacées l'une de l'autre d'une valeur égale à la course de rotation de la bague (16) par rapport à la chemise (13), c'est-à-dire à la différence de longueur entre un évidement de la chemise et le doigt correspondant de la bague, sont destinées à recevoir la partie profilée (27) dans les deux positions de fin de course de la bague.

6. Mandrin selon l'une quelconque des revendications 1 à 5, caractérisé en ce que la bague (16) est disposée en bout de la chemise (13) avec interpénétration de leurs extrémités en vis-à-vis.

7. Mandrin selon la revendication 6, caractérisé en ce que la bague (16) comporte un prolongement tubulaire (17) recouvrant la chemise (13)sur une partie importante de la longueur.

8. Mandrin selon l'une quelconque des revendications 1 à 7, caractérisé en ce que le corps (2) comprend, à proximité de son extrémité avant, une gorge annulaire (29) délimitée, du côté de l'extrémité avant du corps, par une surface (30) sensiblement perpendiculaire à l'axe du mandrin, tandis que la bague (16) comporte une collerette conique (32) engagée dans la gorge (29) du corps, en position montée du mandrin.

9. Mandrin selon l'une quelconque des revendications 1 à 7, caractérisé en ce que le corps (2) comprend, à proximité de son extrémité avant, une gorge annulaire (29) délimitée, du côté de l'extrémité avant du corps, par une surface (30) sensiblement perpendiculaire à l'axe du mandrin, tandis que la bague (16) comporte, à son extrémité avant, une pluralité de languettes élastiques (33) destinées à être engagées dans la gorge (29) du corps, en position montée du mandrin.

## Claims

1. A tool-carrying arbor for equipping a rotary machine, such as a drilling machine, of the type comprising a body (2) fixed on the drive shaft of the machine and in which are mounted a plurality of jaws (7) sliding in bores and converging towards the front, the body being integral, at its rear part, with an immobilising ring (5), in front of which there is mounted pivotally on the body a casing (13) the internal wall of which is integral with a nut (9) engaged with the outer threaded parts of the jaws, characterised in that the body (2) is provided with peripheral teeth (15) in its area covered by the casing, while the casing comprises a shaped locking member (14) which, designed for engagement in the teeth (15) on the body when the arbor is in the clamping position, is actuated by a ring (16) mounted pivotally on the front end of the arbor body.

2. An arbor according to claim 1, characterised in that the teeth (15) formed in the body (2) are spur teeth, while the locking member (14) consists of a flat spring, the free end of which is inclined with respect to a line perpendicular to the teeth when no force is exerted on it.

3. An arbor according to claim 2, characterised in that the flat spring (14) projects inwards in a hollowed-out portion of the casing (13) in which there is displaceably arranged a shaped tongue (25), integral with the ring (16), which is designed, in an angular end position, to rest against the spring (14) to disengage the latter from the teeth.

4. An arbor according to any one of claims 1 to 3, characterised in that the casing (13) comprises, opening in its front-facing face, a plurality of recesses (19) centred on the arbor axis and inside each of which there is engaged a finger (23) which, integral with the ring, is of shorter length than the corresponding recess, this length being determined in the direction of the arc along which this recess extends.

5. An arbor according to claim 4, characterised in that the casing (13) comprises, in its part facing the ring, a resilient tongue the free end of which is provided with a shaped portion (27), while the ring (16) comprises two notches (28) which are spaced from each other by a value equal to the rotational travel of the ring (16) with respect to the casing (13), that is to say to the difference in length between a recess in the casing and the corresponding finger of the ring, and are designed to accommodate the shaped portion (27) in the two ring travel end positions.

6. An arbor according to any one of claims 1 to 5, characterised in that the ring (16) is disposed at the end of the casing (13), with their opposing ends interlocking.

7. An arbor according to claim 6, characterised in that the ring (16) comprises a tubular extension (17) covering the casing (13) over a large portion of its length.

8. An arbor according to any one of claims 1 to 7, characterised in that the body (2) comprises, in the vicinity of its front end, an annular groove (29) defined, towards the front end of the body, by a surface (30) substantially perpendicular to the axis of the arbor, while the ring (16) comprises a conical flange (32) engaged in the groove (29) in the body when the arbor is in the assembled position.

9. An arbor according to any one of claims 1 to 7, characterised in that the body (2) comprises, in the vicinity of its front end, an annular groove (29) defined, towards the front end of the body, by a surface (30) substantially perpendicular to the axis of the arbor, while the ring (16) comprises, at its front end, a plurality of resilient tongues (33) designed for engagement in the groove (29) in the body when the arbor is in the assembled position.

## Patentansprüche

1. Werkzeugfutter zur Ausstattung einer Drehmaschine, wie z. B. einer Bohrmaschine, mit einem auf der Motorwelle der Maschine befestigten Körper (2), in dem mehrere spannbacken (7) gleitend in den Bohrungen und nach vorn konvergierend gelagert sind, wobei der Körper in seinem hinteren Teil mit einem Feststellring (5) verbunden ist, vor dem auf dem Körper ein Mantel (13) drehbar gelagert ist, dessen Innenwand mit einer Mutter (9) verbunden ist, die mit dem äußeren Gewindeteil der spannbacken in Eingriff ist, dadurch gekennzeichnet, daß der Körper (2) in dem mit dem Mantel überdeckten Teil mit einer Randverzahnung (15) versehen ist, während der Mantel ein Profil-Verriegelungselement (14) aufweist, das zum Eingriff in die Verzahnung (15) des Körpers in der festgezogenen Position des Futters mittels eines Ringes (16) betätigt wird, der auf dem vorderen Ende des Körpers des Futters drehbar gelagert ist.

2. Futter nach Anspruch 1, dadurch gekennzeichnet, daß die auf dem Körper (2) eingearbeitete Verzahnung (15) eine gerade Verzahnung ist, während das Verriegelungselement (14) aus einer flachen Feder besteht, deren freies Ende bezüglich der Senkrechten zu den Zähnen geneigt ausgerichtet ist, wenn darauf nicht eingewirkt wird.

3. Futter nach Anspruch 2, dadurch gekennzeichnet, daß die flache Feder (14) nach innen in einen ausgesparten Teil ragt, den der Mantel (13) aufweist, in welchem eine mit dem Ring (16) verbundene Profilleiste (25) verschiebbar ist, um in einer äussersten Winkelposition gegen die Feder (14) zu drücken, um sie aus der Verzahnung herauszubewegen.

4. Futter nach einem der Ansprüche 1 bis 3, dadurch gekennzeichnet, daß der Mantel (13) mehrere in seine nach vorn mündende Fläche weisende und auf der Achse des Futters zentrierte Aussparungen (19) aufweist, wobei im Innern von jeder von ihnen ein Zapfen (23) im Eingriff ist, der mit dem Ring verbunden ist und eine Länge besitzt, die kleiner als die der entsprechenden Aussparung ist, wobei diese Länge in der Richtung der Kreisbogens betrachtet wird, entlang dem sich die Aussparung erstreckt.

5. Futter nach Anspruch 4, dadurch gekennzeichnet, daß der Mantel (13) in seinem gegenüber dem Ring liegenden Teil eine elastische Leiste aufweist, deren freies Ende mit einem Profilteil (27) versehen ist, während der Ring (16) zwei Kerben (28) aufweist, die voneinander um einen Wert beabstandet sind, der gleich dem Drehweg des Rings (16) bezüglich des Mantels (13), d.h. bezüglich des Längenunterschieds zwischen einer Aussparung des Mantels und dem entsprechenden Zapfen des Rings ist und die zur Aufnahme des Profilteils (27) in den beiden Endpositionen des Rings dienen.

6. Futter nach einem der Ansprüche 1 bis 5, dadurch gekennzeichnet, daß der Ring (16) am Kopfende des Mantels (13) angeordnet ist, wobei sich deren Enden gegenseitig gegenüberliegend durchdringen.

7. Futter nach Anspruch 6, dadurch gekennzeichnet, daß der Ring (16) eine rohrförmige Verlängerung (17) aufweist, die den Mantel (13) auf einem großen Teil seiner Länge überdeckt.

8. Futter nach einem der Ansprüche 1 bis 7, dadurch gekennzeichnet, daß der Körper (2) bei seinem vorderen Ende eine kreisringförmige Nut (29) aufweist, die zur Seite des Vorderendes des Körpers hin durch eine im wesentlichen senkrecht zur Achse des Futters verlaufende Fläche (30) begrenzt ist, während der Ring (16) einen konischen Kragen (32) aufweist, der in der montierten Position des Futters in die Nut (29) des Körpers eingreift.

9. Futter nach einem der Ansprüche 1 bis 7, dadurch gekennzeichnet, daß der Körper (2) bei seinem vorderen Ende eine kreisringförmige Nut (29) aufweist, die zur Seite des Vorderendes des Körpers hin durch eine im wesentlichen senkrecht zur Achse des Futters verlaufende Fläche (30) begrenzt ist, während der Ring (16) an seinem Vorderende eine Vielzahl elastischer Leisten (33) aufweist, um in der montierten Position des Futters in die Nut (29) des Körpers einzugreifen.
